Europäisches Patentamt

(19) European Patent Office

Office européen des brevets

(11) Numéro de publication: **0 010 004**
**B1**

(12) **FASCICULE DE BREVET EUROPEEN**

(45) Date de publication du fascicule du brevet: **02.03.83**

(51) Int. Cl.³: **B 60 C 25/00**

(21) Numéro de dépôt: **79400515.7**

(22) Date de dépôt: **20.07.79**

(54) **Procédé et appareil pour la mise en place et le démontage des chambres dites "increvables" équipant certains pneumatiques.**

(30) Priorité: **10.10.78 FR 7828877**

(43) Date de publication de la demande:
**16.04.80 Bulletin 80/8**

(45) Mention de la délivrance du brevet:
**02.03.83 Bulletin 83/9**

(84) Etats contractants désignés:
**AT BE CH DE GB IT LU NL SE**

(56) Documents cités:
**DE - A - 1 680 520**
**FR - A - 2 185 516**
**FR - A - 2 222 234**
**FR - A - 2 334 519**
**US - A - 1 535 382**
**US - A - 3 180 015**

(73) Titulaire: **Etablissements M. Muller & Cie**
**50-56, rue des Tournelles**
**F-75140 Paris Cedex 03 (FR)**

(72) Inventeur: **Jacquemin, Paul**
**54, avenue Charles-de-Gaulle**
**Lesches par Esbly, Seine-et-Marne (FR)**

(74) Mandataire: **Tony-Durand, Serge**
**Cabinet Tony-Durand 22, Boulevard Voltaire**
**F-75011 Paris (FR)**

Courier Press, Leamington Spa, England.

Procédé et appareil pour la mise en place et le démontage des chambres dites "increvables"
équipant certains pneumatiques

La présente invention a pour objet un procédé et un appareil spécialement conçus pour la mise en place et le retrait de chambres du type dit "increvable" qui équipent les pneumatiques de certains véhicules.

Ces chambres consistent en réalité en un boudin en caoutchouc présentant des alvéoles transversales. De telles chambres sont utilisées pour équiper les pneumatiques de véhicules pour lesquels les risques de crevaison sont très élevés, ou bien doivent absolument être évités, comme cela est le cas pour les véhicules blindés de l'armée ou de la gendarmerie, et certains engins de travaux publics.

Du fait même de l'importance des dimensions des pneumatiques des véhicules de ce genre, les chambres correspondantes présentent elles-mêmes un volume important. Dans ces conditions, les opérations de mise en place et de démontage sont extrêmement difficiles à réaliser, compte tenu que le volume de ces chambres ne peut pas être réduit par dégonflage, comme cela est le cas pour des chambres à air de type normal.

Pour effectuer la mise en place des chambres dites "increvables", on a déjà proposé des dispositifs comportant des moyens de déformation destinés à assurer l'écrasement préalable de la chambre increvable à mettre en place, ainsi que des moyens de manoeuvre permettant d'introduire ensuite celle-ci dans le pneumatique correspondant. Ainsi le brevet français 72.18648 (n° de publication 2185516) décrit un dispositif qui comprend un tube de guidage et de confinement de la chambre, terminé par un entonnoir d'injection de la chambre confinée, présentant un orifice sensiblement circulaire destiné à être engagé dans l'ouverture d'une face du pneumatique. Des moyens prévus sur cet entonnoir pour assurer la fixation du pneumatique, comportent un vérin muni d'un poussoir mobile capable de balayer le tube de guidage, et un déflecteur amovible susceptible d'obturer, au moins partiellement, l'ouverture d'une face du pneumatique.

On met en oeuvre ce dispositif en réalisant la déformation préalable de la chambre par des poussées de sens inverse sur deux parties diamétralement opposées du pneumatique, puis on introduit ensuite la chambre dans un couloir étroit de confinement, qui peut du reste être utilisé pour réaliser la contraction de cette chambre. Mais alors, il faut exercer une poussée vers la chambre tout en empêchant qu'elle ressorte par l'ouverture de la face opposée du pneumatique.

Il s'agit donc là d'un procédé relativement compliqué. Du reste, d'une manière générale, les dispositifs existant actuellement ne donnent pas entière satisfaction et ils sont d'un emploi relativement peu commode. Par ailleurs, ces dispositifs sont en général adaptés à une ou quelques dimensions déterminées de pneumatiques, mais ne peuvent pas être utilisés pour des pneumatiques de dimensions différentes, à moins de changer un certain nombre de leurs organes constitutifs. Enfin ces dispositifs sont conçus pour réaliser uniquement l'opération de mise en place, mais ne permettent pas de procéder au retrait ultérieur d'une chambre increvable du type en cause.

C'est pourquoi, la présente invention a pour but de proposer un procédé et un appareil permettant d'effectuer indifféremment l'une ou l'autre de ces deux opérations. Ce procédé et cet appareil sont de plus conçus pour pouvoir être utilisés pour une large gamme de pneumatiques de dimensions très différentes, en l'occurrence aussi bien pour des pneumatiques atteignant un diamètre de l'ordre de 450 mm que pour des pneumatiques atteignant un diamètre de 1,75m. D'autre part, l'appareil selon l'invention est agencé de façon que son maniement soit particulièrement aisé aussi bien pour l'opération de montage que pour l'opération de démontage.

Le procédé de montage faisant l'objet de la présente invention est essentiellement caractérisé en ce que cette déformation est obtenue en exerçant sur la chambre un effort d'extension selon un axe disposé dans un plan perpendiculaire au plan général médian de ce pneumatique, et en ce que, tout en maintenant cet effort d'extension, on place à l'intérieur du pneumatique l'une des extrémités de l'élément allongé ainsi obtenu et enfin on pousse à l'intérieur de la partie diamétralement opposée du pneumatique, l'autre extrémité de ce élément allongé, tout en relâchant l'effort d'extension exercé jusqu'ici sur la chambre.

Ainsi l'effort d'extension exercé sur la chambre pendant son introduction dans le pneumatique permet d'obtenir une réduction de la cote d'encombrement de cette chambre dans le sens transversal, ce qui rend possible le passage de celle-ci à travers l'ouverture correspondante du pneumatique. Ceci permet donc de placer aisément l'extrémité avant de la chambre increvable dans la partie adjacente du pneumatique.

Quant á l'appareil selon l'invention, il est caractérisé en ce qu'en regard d'un bâti apte à maintenir un pneumatique dans une position verticale, il comporte un dispositif de manipulation de la chambre à mettre en place, lequel comprend un compas d'extension disposé dans un plan perpendiculaire au plan médian du pneumatique, et monté basculant sur un chariot susceptible d'être déplacé en direction du bâti de maintien de ce pneumatique, une série de moyens de manoeuvre distincts permettant de commander respectivement l'ecartement des deux branches du compas d'extension, le basculement de celui-ci, ainsi que le déplacement du chariot.

Ainsi, après avoir engagé les extrémités des deux branches du compas de ce dispositif à l'intérieur d'une chambre increvable on peut procéder à l'extension de celle-ci par écartement des deux branches de ce compas, ce qui permet la mise en oeuvre du procédé de montage exposé précédemment. Puis, par une manoeuvre combinée d'avance du chariot et de basculement du compas d'extension, on peut introduire l'une des extremités avant de la chambre dans la base du pneumatique, en la poussant et en la guidant à l'intérieur de celle-ci à l'aide de la branche inférieure du compas, après quoi l'extrémité opposée de cette chambre est poussée à l'intérieur de la partie haute du pneumatique au moyen de la branche supérieure du compas.

Cependant comme il a déjà été indiqué, le présent appareil est également conçu pour permettre le démontage aisé d'une chambre increvable. A cet effet, il est prévu d'une part, un bras amovible de poussée susceptible d'être adapté sur l'une des branches du compas d'extension, et d'autre part, un système d'écrasement partiel du pneumatique sur le bâti de maintien de celui-ci, de façon à provoquer la saillie d'une partie de la chambre dans l'ouverture centrale du pneumatique. Ainsi après avoid placé l'extrémité du bras de poussée contre cette partie de la chambre, on obtient très facilement l'éjection de celle-ci en dehors du pneumatique par un simple mouvement d'avancement du bras de poussée, grâce à un déplacement du chariot dans le sens voulu.

Dans ces conditions, l'opération de démontage est aussi facile à réaliser que la mise en place d'une chambre de type increvable.

Cependant, d'autres particularités et avantages du procédé et de l'appareil selon l'invention apparaîtront au cours de la description suivante. Celle-ci est donnée en référence au dessin annexé à simple titre indicatif, et sur lequel:

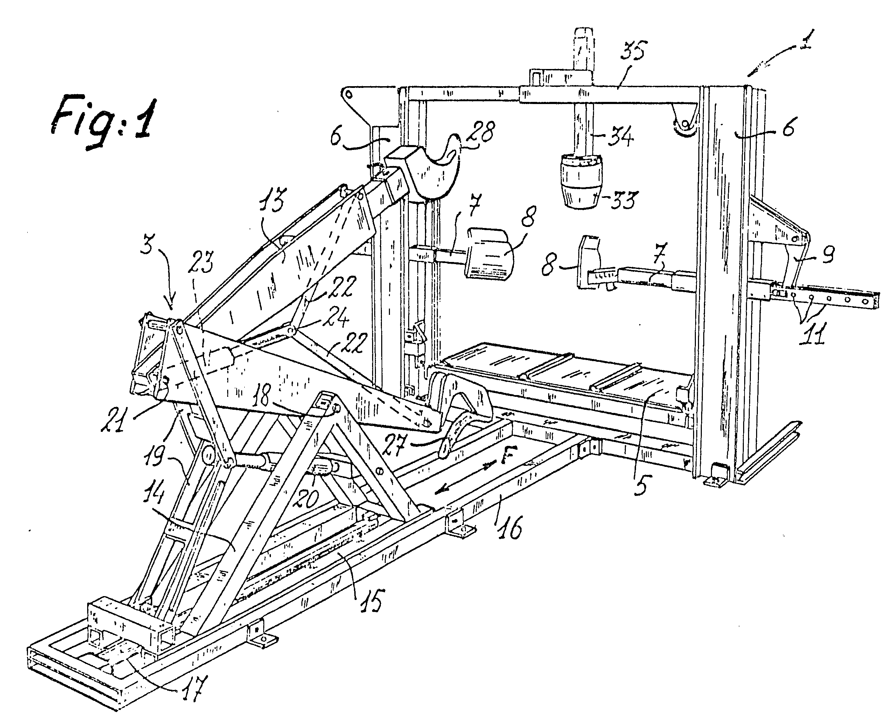

La figure 1 est une vue en perspective de l'ensemble du présent appareil et des différents accessoires de celui-ci;

la figure 2 est une vue schématique en élévation de côté du présent appareil, cette vue illustrant la mise en place d'une chambre increvable sur le compas d'extension;

la figure 3 est une vue partielle en coupe-élévation d'un détail;

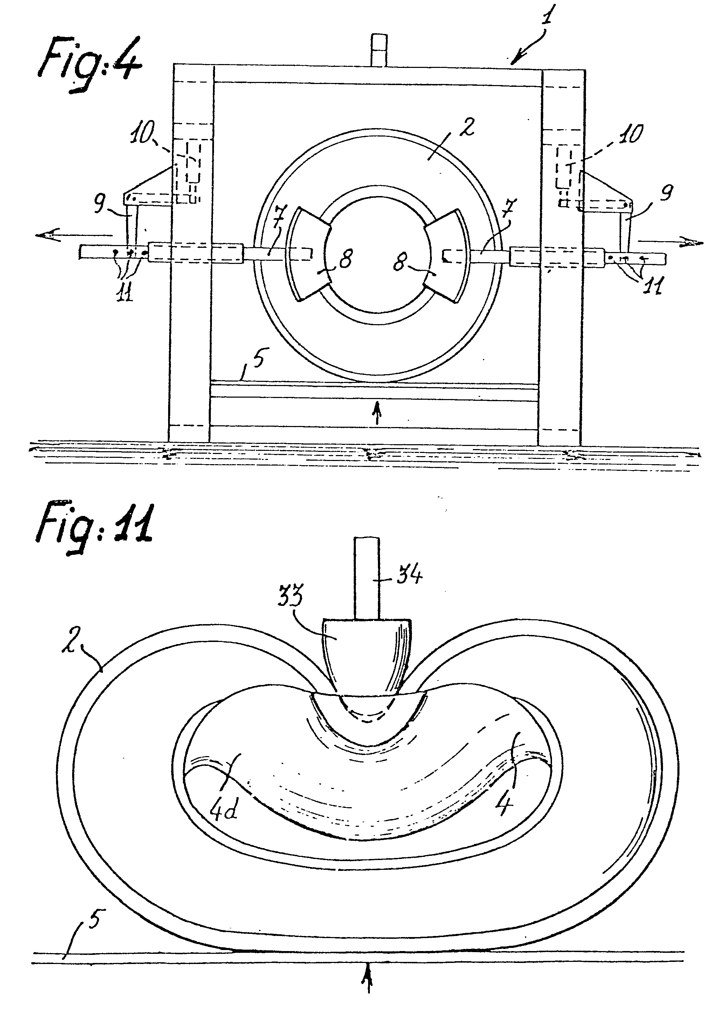

la figure 4 est une vue en élévation de face du bâti de maintien du pneumatique et ce, après mise en place de celui-ci.

les figures 5 à 7 sont des vues similaires à la figure 2, mais qui illustrent différentes phases successives de l'opération de mise en place d'une chambre increvable à l'intérieur d'un pneumatique;

la figure 8 est une vue similaire à la figure 2, mais qui illustre la transformation effectuée sur le présent appareil pour utiliser celui-ci, afin de procéder au démontage d'une chambre increvable;

les figures 9 et 10 sont des vues similaires qui illustrent deux opérations successives de cette opération de démontage;

la figure 11 est une vue en élévation de face, à échelle différente, d'un pneumatique soumis à un écrasement partiel au cours de ces opérations.

Le présent appareil comprend en combinaison:

— d'une part, un bâti 1 en forme de portique, destiné à assurer le maintien en place d'un pneumatique 2 dans une position verticale;
— et d'autre part, un dispositif de manipulation 3 destiné à assurer la mise en place d'une chambre increvable 4 à l'intérieur du pneumatique 2.

A sa partie inférieure, le portique 1 comporte une plateforme horizontale 5 montée mobile dans le sens vertical entre les deux montants latéraux 6 de celui-ci. Cette plate forme est destinée à recevoir le pneumatique 2 à l'intérieur duquel doit être mise en place la chambre increvable 4.

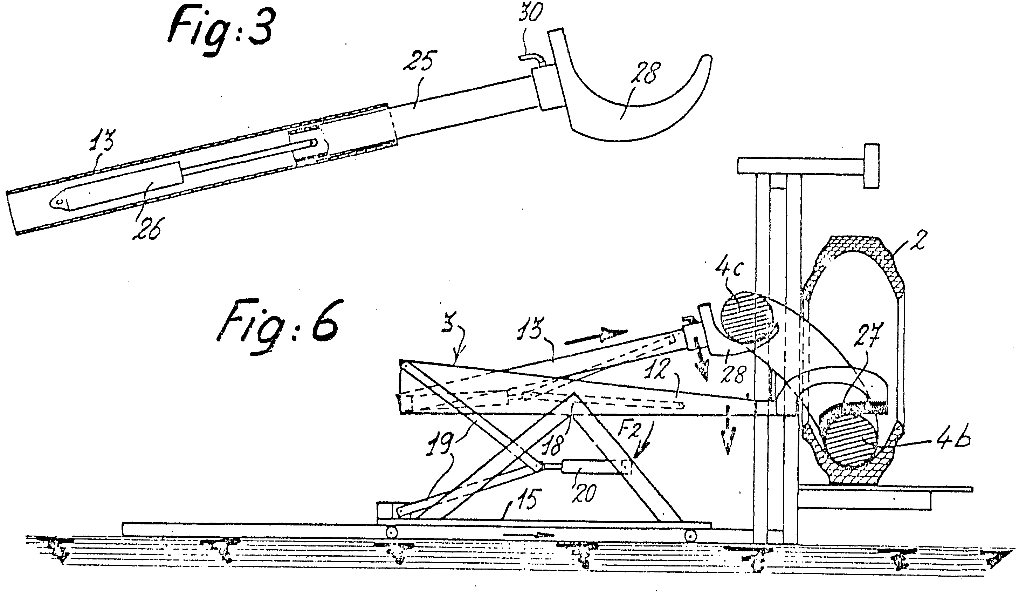

Ces montants sont traversés par des barres horizontales coulissantes 7 dont l'extrémité interne est munie d'une plaque 8 destinée, á être placée à l'intérieur du bord interne du pneumatique, comme représenté à la figure 3. Quant à l'extrémité opposée de chacune de ces barres, elle est accouplée par l'intermédaire d'un levier coudé 9 avec un vérin de commande 10 De préférence, l'extrémité correspondante de chaque barre coulissante présente une série de trous 11, de façon à pouvoir modifier l'emplacement du point d'articulation du levier de manoeuvre 9 correspondant.

Après mise en place du pneumatic 2 sur la plate-forme 5, celle-ci est relevée par l'intermédiaire d'un vérin de commande non représenté, jusqu'à ce que la partie correspondante de ce pneumatique se trouve située au niveau des plaques 8. Celles-ci sont alors mises en place et on manoeuvre ensuite les vérins 10, de façon à écarter au maximum ces plaques. Ceci assure donc l'écartement de l'ouverture centrale du pneumatique et l'immobilisation parfaite de ce dernier dans une position verticale.

Quant au dispositif de manipulation 3, il comprend en premier un compas d'extension dont les deux branches 12 et 13, sont disposées dans un plan vertical à angle droit par rapport au plan médian du pneumatique 2 immobilisé sur le bâti 1. Ce compas est monté basculant sur un support 14 en forme de chevalet porté par un chariot 15. Ce dernier est mobile dans un sens et dans l'autre selon un direction F perpendiculaire au plan général du bâti 1. A cet effet, ce chariot est monté coulissant à l'intérieur d'un cadre 16 qui sert de châssis fixe à l'ensemble et son déplacement peut être commandé au moyen d'un vérin 17.

La branche inférieure 12 du compas d'extension est montée pivotante autour d'un axe 18 porté par le support 14 de ce compas. Le mouvement de basculement de celui-ci autour de cet axe peut être commandé par l'intermédiaire d'une bielle brisée 19 actionnée par un vérin 20 attaché d'une part sur l'axe central d'articulation de cette bielle, et d'autre part sur un point fixe du support 14, les deux branches de la bielle brisée s'articulant respectivement sur le chariot 15 et sur la branche inférieure 12 du compas d'extension.

Les deux branches de ce compas s'articulent l'une sur l'autre par l'intermédiaire d'un axe 21. Leur écartement peut être commandé au moyen d'une bielle brisée 22 actionnée par un vérin 23. Ce dernier prend appui sur l'axe d'articulation 21 des deux branches du compas et sa tige de manoeuvre s'articule par ailleurs sur l'axe médian 24 de la bielle brisée 22. La branche supérieure 13 du compas d'extension comporte une rallonge télescopique 25 actionnée par un vérin 26 disposé à l'intérieur de cette branche (voir figure 3). Cependant les deux branches 12 et 13 de ce compas sont destinées à recevoir à leur extrémité des griffes respectivement 27 et 28. Chacune de ces griffes est montée de façon amovible.

A cet effet, la griffe 27 est pourvue d'un embout destiné à être engagé à l'intérieur de l'extrémité de la branche inférieure 12 du compas d'extension, son immobilisation en place étant assurée par un verrou commandé par une manette 29. Quant à la griffe 28, elle porte également un embout destiné à être engagé à l'intérieure de l'extrémité de la rallonge 25 et à y être bloqué au moyen d'un verrou commandé par une manette 30.

Pour effectuer la mise en place d'une chambre increvable 4 à l'intérieur du pneumatique 2, on procède de la façon suivante:

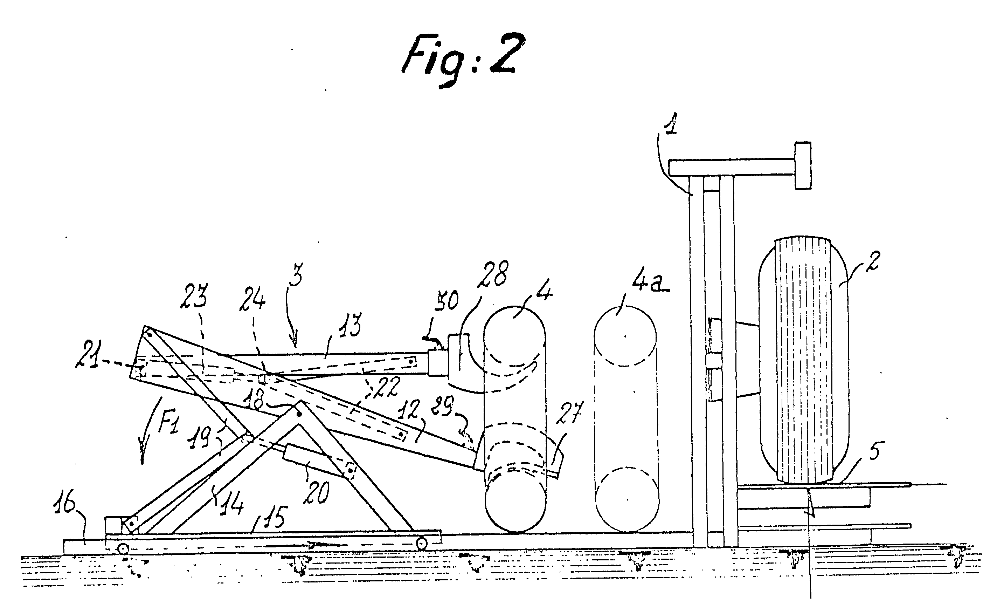

Après avoir réduit au maximum l'écartement des deux branches du compas d'extension et avoir incliné celui-ci vers le bas, on présente cette chambre en regard des griffes 27 et 29 dans la position 4a (voir figure 2), puis on l'engage sur ces griffes. Celles-ci se trouvent ainsi placées à l'intérieur de la chambre 4.

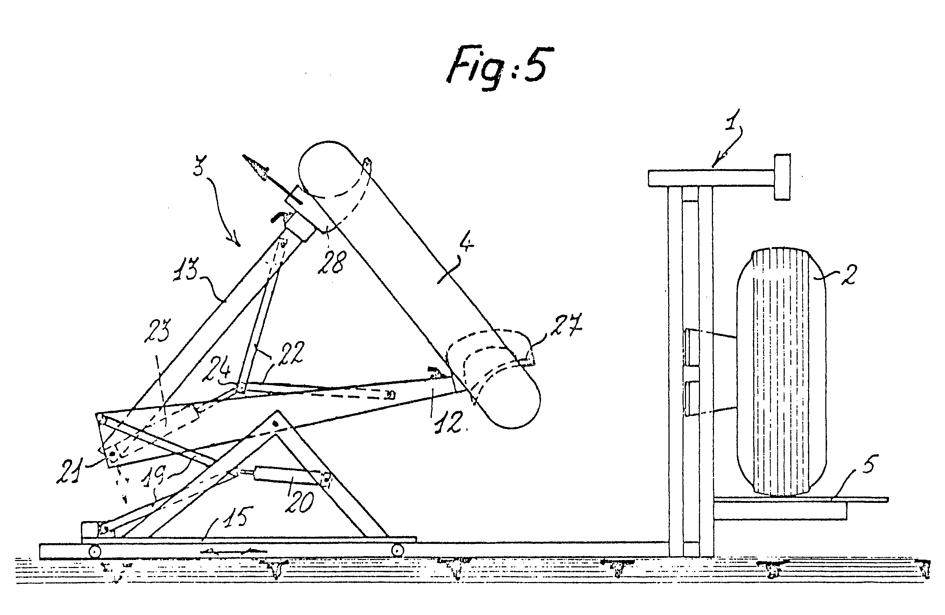

Après avoir fait basculer en arrière le compas d'extension par commande du vérin 20 jusque dans la position illustrée à la figure 5, on commande l'escartement des deux branches 12 et 13 de ce compas et ce, au moyen du vérin 23. Les griffes 27 et 28 écartent ainsi les deux parties opposées correspondantes de la chambre 4. Ceci assure une extension de cette chambre dans le sens de la longueur de l'appareil selon un axe perpendiculaire au plan général médian du pneumatique (voir figure 5), en lui donnant une forme ovale et en réduisant la section des deux brins correspondants. Ceci permet d'amener l'encombrement transversal de la chambre increvable à une cote inférieure au diamètre de l'ouverture centrale du pneumatique 2 de façon à autoriser l'introduction ultérieure de la chambre à l'intérieur de celui-ci.

Pour cette introduction, on déplace l'ensemble du dispositif de manipulation 3 en direction de la chambre 2, par coulissement du chariot 15 sous l'action du vérin 17. Mais, en même temps, on fait basculer le compas d'extension vers le bas par pivotement, selon la flèche F2, afin d'introduire l'extrémité avant 4b de la chambre 4 à l'intérieur de la partie inférieure du pneumatique, comme représenté à la figure 5. A ce sujet, il convient de noter que l'extrémité de la branche inférieure 12 du compas basculant 12—13 est alors utilisée pour exercer une poussée sur l'extrémité avant 4b de la chambre 4 et pour la guider afin de la mettre en place dans le fond de la partie inférieure du pneumatique.

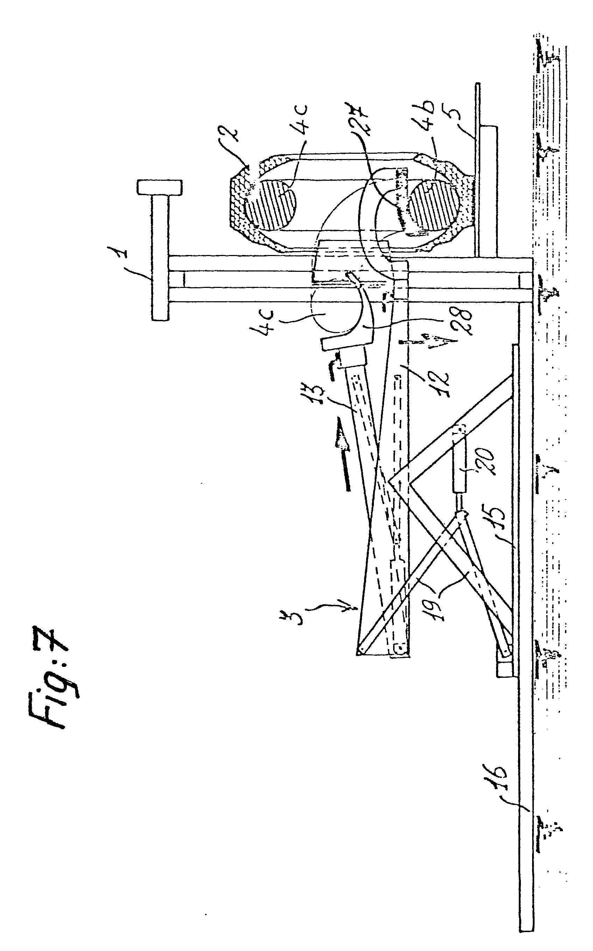

Enfin on procède à l'introduction du reste de la chambre increvable 4 en poussant l'extrémité opposée 4c de cette chambre à l'intérieur de la partie supérieure du pneumatique tout en supprimant progressivement l'effort d'extension exercé jusqu'ici sur cette chambre. Ceci est obtenu en resserrant les deux branches 12 et 13 du compas (voir fig. 6 et 7) et en exerçant une poussée sur l'extrémité 4c de la chambre 4, au moyen de la branche supérieure 13 du compas. A cet effet, on commande l'extension de celle-ci grâce à la rallonge 25 afin que la griffe 28 vienne pousser et guider l'extrémité supérieure 4c de la chambre à l'intérieur de la partie supérieure du pneumatique 2. Sous l'effet de son élasticité, la chambre 4 se place alors d'elle-même dans sa position définitive.

Les différentes manoeuvres à réaliser par l'opérateur sont donc relativement simples, et peuvent être toutes commandées à partir d'un poste central réunissant les organes de commande des différents vérins de l'appareil. Ces manoeuvres ne nécessitent évidemment aucun effort. Tout au plus, il convient en début d'operation, de placer la chambre 4 sur les deux griffes 27 et 28, après quoi toutes les autres manoeuvres sont commandées par les vérins de l'appareil.

Il faut également observer que cet appareil peut être utilisé pour des pneumatiques et des chambres de dimensions très différentes les unes des autres. En effet, contrairement à ce qui est le cas pour certains appareils actuellement utilisés, le présent appareil ne comporte aucun organe ou dispositif dont les dimensions seraient impérativement liées à une taille déterminée de pneumatiques. Il suffit, dans le cas présent, de régler en conséquence la position des différents organes mobiles de l'appareil.

Un autre avantage essentiel du présent appareil réside dans le fait que celui-ci peut être utilisé, non seulement pour la mise en place d'une chambre increvable dans un pneumatique devant comporter une telle chambre, mais également pour le démontage d'une telle chambre. A cet effet, le présent appareil comporte des accessoires amovibles spécialement conçus pour permettre une telle opération.

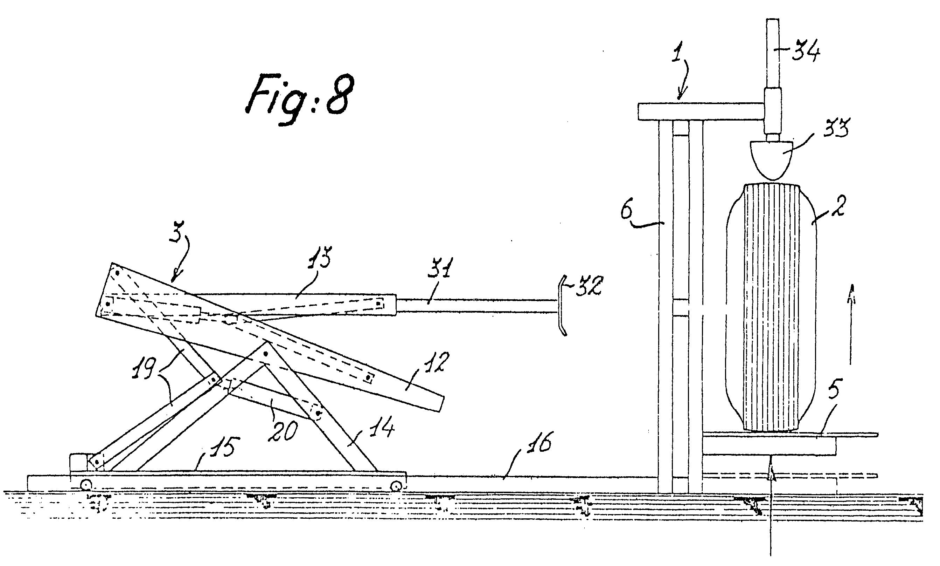

L'un des ces accessoires consiste en un bras de poussée 31 pourvu d'une plaque d'appui 32. Ce bras est destiné à être adapté au bout de la branche supérieure 13 du compas d'extension du dispositif de manipulation 3, comme représenté à la figure 8. Un des autres accessoires prévus pour le démontage d'une chambre increvable consiste en un organe d'appui 33 en forme d'ogive porté par une barre 34. Celle-ci est destinée à permettre la fixation de cet organe d'appui sur la branche supérieure 35 du portique 1. On peut ainsi amener cet organe en appui contre la partie supérieure du pneumatique 2 dont la chambre increvable doit être démontée (voir figure 8).

Pour retirer celle-ci, on commence par commander le relèvement de la plate-forme 5 afin de provoquer la déformation de la partie supérieure du pneumatique. En effet, ceci amène l'organe d'appui 33 en forme d'ogive à s'enfoncer dans la partie supérieure due pneumatique, de sorte que la partie correspondante 4d de la chambre 4 vient faire saillie dans l'ouverture centrale du pneumatique, comme représenté à la figure 11.

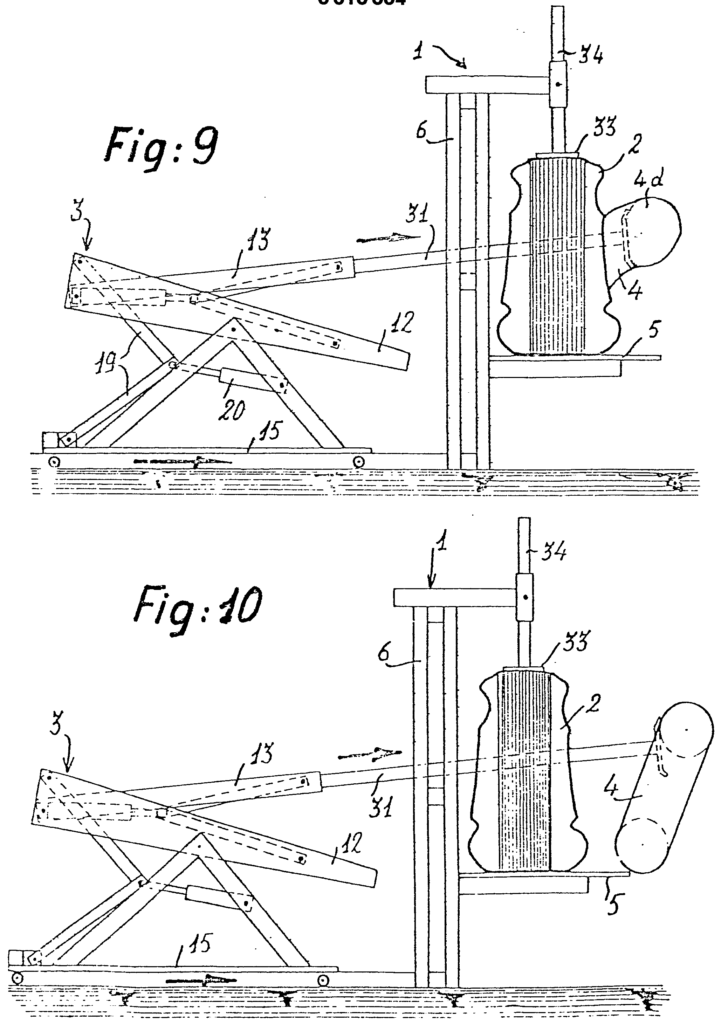

Tout en maintenant le pneumatique et la chambre ainsi déformés, on amène la plaque 32 du bras de poussée 31 au contact de la partie découverte 4d de la chambre 4 et, en exerçant ensuite une poussée avec le bras 31 par avancement du chariot 15, on provoque le dégagement de la partie 4d de la chambre 4 en dehors du pneumatique 2 (comme représenté à la figure 9), puis le démontage complet de cette chambre increvable (voir figure 10).

Il faut observer que l'effort de poussée sur la chambre increvable peut être obtenu soit par un simple mouvement du chariot 15 et de l'ensemble du dispositif de manipulation 3, soit par une extension du bras de poussée 31 grâce au vérin 26 prévu à l'intérieur de la branche supérieure 13 du compas d'extension, soit encore par une combinaison de ces deux manoeuvres.

Il convient également de noter que, de même que pour l'operation de mise en place, le présent appareil peut être utilisé pour démonter les chambres increvables équipant des pneumatiques de dimensions plus ou moins importantes. En effet, il suffit d'adapter la position des différents organes utiles de l'appareil en fonction des dimensions du pneumatique correspondant.

Grâce à sa conception, l'appareil selon l'invention permet de procéder très facilement et sans efforts, au retrait ainsi qu'à la mise en place d'une chambre increvable équipant un pneumatique du type en cause et ce, quelles que soient les dimensions de ce dernier. .

Bien entendu, l'appareil selon l'invention n'est pas limité à la forme de réalisation décrite ci-dessus à simple titre d'exemple indicatif. Ainsi, il est bien évident que cet appareil peut comporter des moyens mécaniques de manoeuvre différents pour commander d'une part, le basculement du compas d'extension sur son support, et d'autre part l'écartement des deux branches de ce compas. Ainsi pour cette dernière commande, il serait possible de prévoir un vérin reliant directement les extrémités libres des deux branches du compas. De façon similaire, le basculement du compas d'extension pourrait être commandé par un vérin reliant la branche inférieure de celui-ci au chariot 15. Mais tous autres moyens mécaniques de manoeuvre pourraient également être prévus. Par ailleurs, le déplacement du chariot 15 pourrait également être commandé par des moyens différents.

Quant à la déformation initiale du pneumatique en vue de l'operation de démontage d'une chambre increvable, elle pourrait être obtenue par un mouvement de descente de l'organe d'appui 33 en laissant fixe la plate-forme inférieure 5 au lieu de prévoir le relèvement de cette derniére. Mais, encore une fois, de nombreuses autres modifications peuvent être apportées à l'appareil selon l'invention.

### Revendications

1. Procédé pour la mise en place d'une chambre (4) dite "increvable" à l'intérieur d'un pneumatique (2) par introduction à travers l'ouverture centrale de l'une des faces de celui-ci après avoir fait subir une déformation à cette chambre (4) pour lui donner la forme d'un élément allongé, caractérisé en ce que cette déformation est obtenue en exerçant sur la chambre (4) un effort d'extension selon un axe disposé dans un plan perpendiculaire au plan général médian de ce pneumatique (2), et en ce que tout en maintenant cet effort d'extension, on place à l'intérieur du pneumatique (2) l'une des extrémités de l'élément allongé ainsi obtenu et enfin on pousse, à l'intérieur de la partie diamètralement opposée du pneumatique (2) l'autre extrémité de cet élément allongé, tout en relâchant l'effort d'extension exercé jusqu'ici sur la chambre (4).

2. Procédé selon la revendication 1, caractérisé en ce que pour exercer l'effort d'extension prévu sur la chambre (4) on place celle-ci entre les extrémités des deux branches (12, 13) d'un dispositif formant compas d'extension.

3. Appareil pour la mise en oeuvre du procédé selon l'une des revendications précédentes, caractérisé en ce qu'en regard d'un bâti (1) apte à maintenir un pneumatique (2) dans une position verticale, il comporte un dispositif de manipulation (3) de la chambre (4) à mettre en place, lequel comprend un compas d'extension disposé dans un plan perpendiculaire au plan médian du pneumatique (2), et monté basculant sur un chariot (15) susceptible d'être déplacé en direction du bâti (1) de maintien de ce pneumatique (2), une série de moyens de manoeuvre permettant de commander respectivement l'écartement des deux branches (12, 13) du compas d'extension, le basculement de celui-ci, ainsi que le déplacement du chariot (15).

4. Appareil selon la revendication 3, caractérisé en ce qu'il comprend deux griffes (27, 28) susceptibles d'être fixées respectivement sur l'extrémité de chacune des duex branches (12, 13) du compas d'extension, ces deux griffes (27, 28) étant adaptées à être engagées à l'intérieur de la chambre increvable (4) à monter a l'intérieur du pneumatique (2).

5. Appareil selon l'une des revendications 3 et 4, caractérisé en ce que dans le but de pouvoir assurer également le retrait d'une chambre increvable (4) en dehors d'un pneumatique (2), il comprend d'une part, un système (5, 33, 34) d'écrasement partiel du pneumatique (2) sur le bâti (1) de maintien de celui-ci, de façon à provoquer la saillie d'une partie (4d) de la chambre (4) dans l'ouverture centrale du pneumatique (2), et d'autre part un bras de poussée (31) susceptible d'être adapté au bout de la branche supérieure (13) du compas d'extension afin d'exercer une poussée sur la partie ainsi rendue apparente (4d) de la chambre (4) à démonter.

6. Appareil selon la revendication 5, caractérisé en ce que pour pouvoir réaliser l'écrasement partiel du pneumatique (2) sur son bâti (1) de maintien, le système d'écrasement comporte une plate-forme inférieure (5) mobile dans le sens vertical et en regard de laquelle est prévu un organe amovible d'appui (33), de préférence en forme d'ogive ou similaire, destiné à pénétrer dans la partie supérieure du pneumatique (2) lors du relèvement de la plate-forme inférieure (5).

7. Appareil selon l'une des revendications 3 à 6, caractérisé en ce que la branche inférieure (12) du compas d'extension est montée pivotante sur un support (14) porté par le chariot (15) du dispositif de manipulation et le moyen de basculement du compas consiste en un vérin (20) agissant sur une bielle brisée (19) dont les deux branches s'articulent à leurs extrémités respectivement sur le chariot (15) et sur la branche inférieure (12) du compas d'extension.

8. Appareil selon l'une des revendications 3 à 7, caractérisé en ce que le moyen d'écartement des deux branches (12, 13) du compas consiste en un vérin (23) agissant sur une bielle brisée (22) dont les extrémités s'articulent sur les branches (12, 13) de ce compas.

9. Appareil selon l'une des revendications 3 à 8, caractérisé en ce que le bâti (1) de maintien du pneumatique (2) comporte des plaques (8) d'écartement de l'ouverture centrale de ce dernier, ces plaques (8) étant portées par des barres horizontales (7) montées coulissantes dans les montants (6) de ce bâti (1) et actionnées par l'intermédiaire de vérins (10).

## Claims

1. Method for positioning a so-called "puncture-proof" inner tube (4) of a pneumatic tyre (2) by introduction through the central opening of one of the faces of this latter after having subjected this inner tube (4) to a deformation in order to give it the shape of an elongated element, characterized in that this deformation is obtained by exerting an effort of extension on the inner tube (4) along an axis disposed in a plane at right angles to the general mid-plane of this tyre (2) and that one end of the elongated element thus obtained is placed within the interior of the tyre (2) while maintaining this effort of extension and the other end of this elongated element is finally pushed into the diametrically opposite portion of the tyre (2) while releasing the effort of extension hitherto exerted on the inner tube (4).

2. Method in accordance with claim 1, characterized in that, in order to exert the intended effort of extension on the inner tube (4), this latter is placed between the ends of the two arms (12, 13) of a device forming a compass-type extension unit.

3. Apparatus for the practical application of the method in accordance with any one of the preceding claims, characterized in that, opposite to a frame (1) which is capable of maintaining a tyre (2) in a vertical position, it comprises a device (3) for handling the inner tube (4) to be placed in position, the said device being provided with a compass-type extension unit arranged in a plane at right angles to the mid-plane of the tyre (2) and pivotally mounted on a carriage (15) which is capable of displacement in the direction of the frame (1) for maintaining this tyre (2) in position, a series of operating means for controlling respectively the angular divergence of the two arms (12, 13) of the compass-type extension unit, the pivotal motion of this latter, as well as the displacement of the carriage (15).

4. Apparatus in accordance with claim 3, characterized in that it comprises two claws (27, 28) which are capable of being fixed respectively on the end of each of the two arms (12, 13) of the compass-type extension unit, these two claws (27, 28) being adapted to be engaged within the interior of the puncture-proof inner tube (4) to be mounted within the tyre (2).

5. Apparatus in accordance with either of claims 3 and 4, characterized in that, in order to permit the additional possibility of withdrawal of a puncture-proof inner tube (4) from a tyre (2) it comprises on the one hand a system (5, 33, 34) for partial compression of the tyre (2) against the frame (1) which serves to maintain this latter in position, in such a manner as to cause outward projection of a portion (4d) of the inner tube (4) within the central opening of the tyre (2) and on the other hand a thrust arm (31) which can be adapted to the end of the upper arm (13) of the compass-type extension unit in order to exert a thrust on that portion (4d) of the inner tube (4) to be removed which has thus been made visible.

6. Apparatus in accordance with claim 5, characterized in that, in order to be capable of carrying out partial compression of the type (2) against its support frame (1), the compression system comprises a bottom platform (5) which is capable of moving in the vertical direction and opposite to which provision is made for a removable bearing member (33) which is preferably of bullet-nosed shape or the like and is intended to penetrate into the upper portion of the tyre (2) at the time of lifting of the bottom platform (5).

7. Apparatus in accordance with any one of claims 3 to 6, characterized in that the lower arm (12) of the compass-type extension unit is pivotally mounted on a support (14) carried by the carriage (15) of the handling device and the means for pivotal displacement of the compass-type unit consists of a jack (20) which produces action on a bent connecting-rod (19), the two arms of which are pivotally attached at the ends thereof respectively to the carriage (15) and to the lower arm (12) of the compass-type extension unit.

8. Apparatus in accordance with any one of claims 3 to 7, characterized in that the means for separating the two arms (12, 13) of the compass-type unit consist of a jack (23) which produces action on a bent connecting-rod (22), the ends of which are pivotally attached to the arms (12, 13) of this compass-type unit.

9. Apparatus in accordance with any one of claims 3 to 8, characterized in that the frame (1) for maintaining the tyre (2) in position comprises plates (8) for widening the central opening of this latter, these plates (8) being carried by horizontal bars (7) which are slidably mounted in the upright members (6) of this frame (1) and actuated by means of jacks (10).

**Patentansprüche**

1. Verfahren zum montieren eines sogenannten "platzsicheren" Schlauches (4) im Innern eines Reifens (2) durch Einführen durch die zentrale Öffnung in der Seite des Reifens, nachdem der Schlauch zu einem langgestreckten Element verformt wurde, dadurch gekennzeichnet, daß die Verformung durch eine, zu einer, zur allgemeinen Mittelebene des Reifens (2) senkrechten Ebene, verlaufende Kraft erzielt wird und dadurch, das die Kraft beim Einsetzen eines Endes des langgestreckten Elementes in den Reifen (2) aufrechterhalten, un dann das andere Ende des langgestreckten Elementes in den diametral gegenüberliegenden Teil des Reifens gestoßen wird, wobei die bis jetzt auf den Schlauch (4) ausgeübte Kraft verringert wird.

2. Verfahren gemäß Anspruch 1, dadurch gekennzeichnet, daß zum Ausüben der vorgesehenen Kraft auf den Schlauch (4) dieser zwischen die Enden der beiden Arme (12, 13) einer zirkel-bzw. scherenförmigen Spreizvorrichtung gebracht wird.

3. Vorrichtung zum durchführen des Verfahrens nach einem der vorhergehenden Ansprüche, dadurch gekennzeichnet, daß ein Gestell (1) zum Halten eines Reifens (2) sowie eine Vorrichtung (3) zum Halten des Schlauches (4) vorgesehen sind, wobei letztere in einer zur Mittelebene des Reifens (2) senkrechten Ebene eine zirkel- oder scherenförmige Sreizvorrichtung aufweist, die kippbar auf einem gegenüber dem Haltegestell (1) für den Reifen (2) verschiebbaren Wagen (15) montiert ist, wobei eine Reihe von Stellgliedern zum Steuern der bieden Arme (12, 13) sowie zum Kippen der zirkel- oder scherenförmigen Vorrichtung und zum Verschieben des Wagens (15) vorgesehen sind.

4. Vorrichtung gemäß Anspruch 3, dadurch gekennzeichnet, daß die Enden der beiden Arme (12, 13) der zirkel-bzw. scherenförmigen Vorrichtung Haken (27, 28) aufweisen, die in das Innere des "platzsicheren" Schlauches (4) eingreifen, um ihn in das Innere Des Reifens (2) einzusetzen.

5.Vorrichtung gemäß einem der Ansprüche 3 und 4, dadurch gekennzeichnet, daß um das Herausnehmen des "platzsicheren" Schlauches aus dem Reifen (2) sicherzustellen einerseits eine Einrichtung (5, 33, 34) zum teilweisen Zusammendrücken des Reifens (2) auf dem diesen haltenden Gestell (1) derart vorgesehen ist, daß ein Teil (4d) des Schlauches (4) in die zentrale Öffnung des Reifens (2) vorragt und andererseits am oberen Arm (13) der zirkeloder scherenförmigen Vorrichtung ein Vorschubarm (31) zum Ausüben einer Kraft auf den vorragenden Teil (4d) des herauszunehmenden Schlauches (4) vorgesehen ist.

6. Vorrichtung gemäß Anspruch 5, dadurch gekennzeichnet, daß zum teilweisen Zusammendrücken des Reifens (2) in seinem Haltegestell (1) die Einrichtung zu Zusammendrücken eine untere, senkrecht verschiebbare Plattform (5) aufweist, der gegenüber ein bewegliches Druckorgan (33) vorzugsweise von Olivenform o.dgl. vorgesehen ist, welches in den oberen Teil des Reifens (2) beim Anheben der unteren Plattform (5) eindringt.

7. Vorrichtung gemäß einem der Ansprüche 3 bis 6, dadurch gekennzeichnet, daß der untere Arm (12) der zirkel- oder scherenförmigen Spreizeinrichtung schwenkbar in einer Halterung (14) auf dem Wagen (15) der Vorrichtung gelagert ist, und die Einrichtungen zum Kippin der zirkel- oder scherenförmigen Vorrichtung eine Kolbenzylindereinheit (20) aufweisen, die an einen Kniehebel (19) angreif, dessen beide Hebelarme mit ihren Enden drehbar am Wagen (15) und am unteren Arm (12) der zirkel-bzw. scherenförmigen Spreizvorrichtung gelagert sind.

8. Vorrichtung gemäß einem der Ansprüche 3 bis 7, dadurch gekennzeichnet, daß die Spreizeinrichtung der beiden Arme (12, 13) der

zirkel- bzw. scherenförmigen Spreizvorrichtung, eine Kolbenzylindereinheit (23) aufweisen, die an einen Kniehebel (22) angreift, dessen Enden drehbar in den Armen (12, 13) der zirkel-bzw. scherenförmigen Spreizvorrichtung lagern.

9. Vorrichtung gemäß einem der Ansprüche 3 bis 8, dadurch gekennzeichnet, daß das Haltegestell (1) des Reifens (2) Platten (8) zum Aufweiten der zentralen Öffnung des Reifens aufweisen, die an horizontalen, in den Stützen (6) des Haltegesells (1) verschiebbaren Schienen (6) vorgesehen sind, die durch Kolbenzylindereinheiten (10) zu betätigen sind.

Fig.1

Fig:2

Fig:3

Fig:6

Fig:4

Fig:11

Fig:5

Fig. 7

Fig:8

0 010 004

Fig: 9

Fig: 10

8